# EUROPEAN PATENT SPECIFICATION

(11) **EP 0 316 071 B1**
(45) Date of publication and mention of the grant of the patent: **04.08.1993**
(21) Application number: 88309523.4
(22) Date of filing: 12.10.1988
(51) Int. Cl.: E21B 33/04, F16L 13/14

(54) **Wellhead structure**
Bohrlochkopfstruktur
Structure de tête de puits

(30) Priority: 11.11.1987 GB 8726356; 23.12.1987 US 136986
(43) Date of publication of application: 17.05.1989
(60) Divisional application: 92202030.0
(73) Proprietor: Cooper Industries, Inc., Houston Texas 77002 (US)
(72) Inventor: Szymczak, Edward J., Spring Texas 77373 (US); Cassity, Thomas G., Katy Texas 77450 (US); Taylor, William M., Houston Texas 77055 (US); Tiemer, Peer H., D-3101 Hambühren 2 (DE); Hoes, Larry M., Spring Texas 77379 (US); Smith, Jerry D., Houston Texas 77065 (US); Davies, Timothy C., Leeds West Yorkshire, LS25 1NS (GB)
(74) Representative: Smith, Norman Ian

(56) References cited:
- GB-A- 2 057 615
- GB-A- 2 174 744
- US-A- 2 134 311
- US-A- 2 920 909
- US-A- 3 311 168
- US-A- 3 432 916
- US-A- 3 561 527
- US-A- 3 797 864
- US-A- 4 330 144
- US-A- 4 388 752
- US-A- 4 411 456

## Description

### BACKGROUND

The present invention relates to an improved wellhead structure and to the method of assembling such structure. Compact wellheads have been used to provide a suspension and sealing system for casing and tubing strings from a single head which reduces the stack-up height and reduces the number of connections required. Also, with such compact wellhead the blowout preventer stack is not removed during installation of the casing and tubing. Normally, with the use of such compact heads, the last string of pipe with the casing hangers attached is run into the well and the casing hangers are landed rather than using slips to support a casing string and cutting the string for the installation of a hanger thereon. This system would utilize the slips for support and the elastomeric seals to provide the annulus seal.

Some hangers have utilized slips to engage and support the well string. U. S. Patent Nos. 2,920,909 and 3,311,168 disclose such structure. Other hangers have had an external shoulder which is adapted to seat on an internal housing seat, such as is shown in U. S. Patent Nos. 3,561,527 and 3,797,864. Such hangers are provided normally with external threads on their lower ends and have their well strings threaded thereon.

In the past it has been known that a portion of a remote connector could be remotely cold formed onto the end of a subsea pipeline so that a repair section would be connected to the existing pipeline. Examples of cold forming are shown in U. S. Patent Nos. 3,432,916, 4,330,144; and 4,388,752. U. S. Patent No. 4,662,663 suggests the use of a material within the grooves to compensate for any build-up of pressure therein during forming. U. S. Patent No. 2,134,311 discloses the roll forging of the upper end of a string into grooves within the interior of casing head to support and seal the upper end of the string therein.

Reference is also made to US-A-4892149 which discloses the securing of a tubular member within an annular well member in a cold forging operation.

According to the present invention there is provided a wellhead structure comprising:
a casing string within a well bore,
a housing surrounding the upper end of the string, and
means connecting the housing to the upper end of said string, and
characterised by
an annular adaptor positioned generally coaxially within said housing, said adaptor having an internal recess with lands and grooves on its lower interior, and an upper external recess, said adaptor being positioned within said housing with its internal recess accomodating the upper end of the casing string, the upper end of said casing string having been cold forged into tight gripping and sealing engagement with the interior of said internal recess, and a metal-to-metal seal assembly positioned within said upper external recess to seal between the exterior of said adaptor and the interior of said housing.

Embodiments of the present invention provide improved wellhead structures in which a casing or tubing string is sealed to a housing without the aid of elastomeric seals and include a slip assembly for landing the annular adaptor thereon.

The invention will be described now by way of example only, with particular reference to the accompanying drawings. In the drawings:
FIGURE 1 is a partial longitudinal sectional view of the wellhead structure in which the string is supported on slips while the hanger is lowered into surrounding relationship thereto.
FIGURE 2 is a similar partial sectional view of the structure shown in FIGURE 1 after the cold forging of the upper end of the casing string to the annular adaptor.

### DESCRIPTION OF THE PREFERRED EMBODIMENTS

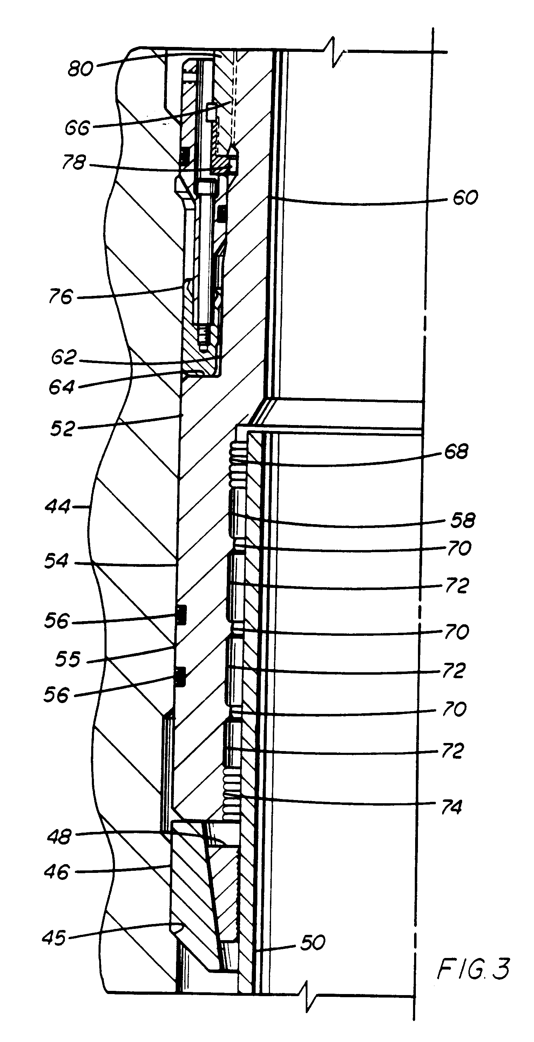

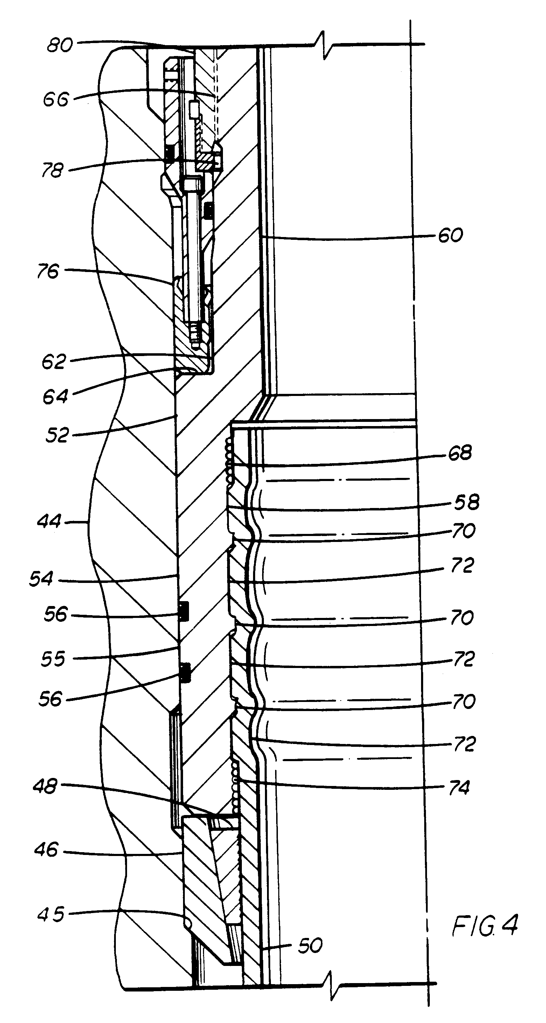

The invention as shown in FIGURES 1 and 2, discloses housing 44 which includes a generally cylindrical interior with upwardly facing landing shoulder 45. Slip bowl 46 is landed on landing shoulder 45 and its slips 48 are in gripping engagement with the exterior of the upper end of casing string 50. Annular adaptor 52 includes lower section 54 having cylindrical exterior surface 55 with suitable resilient seals 56 for sealing against the interior of housing 44 and lower recess 58 on its interior and upper section 60 having outer recess 62 which ends in upwardly facing shoulder 64 and external threads 66 at its upper end.

This contour of the interior of lower section 54 in recess 58 includes upper sharp teeth 68, intermediate lands 70 and grooves 72 and lower sharp teeth 74. Adaptor 52 is preferably positioned with metal-to-metal seal 76 and seal latch 78 in position within recess 62. Latch 78 and seal 76 are set by the downward movement of sleeve 80 which is in threaded engagement with external threads 66. It is generally considered proper procedure to set seal 76 and latch 78 after adaptor 52 has been landed and casing string 50 has been cold forged against the interior of recess 58 as hereinafter explained.

With the components in the position as shown in FIGURE 1, a suitable forging tool (not shown) is lowered through adaptor 52 and the string (not shown) on which it is run into the interior of the upper end of casing string 50. The tool, when in proper position exerts sufficient radial outward pressure on the interior of casing string 50 so that it is deformed into tight sealing and gripping engagement with teeth 68 and 74 and with lands 70 so that any loading from casing string 50 or on adaptor 52 is transferred through slip bowl 48 to landing shoulder 46. The result of this deformation from radial cold forging of the upper end of casing string into its recess is illustrated in FIGURE 2. In this configuration, the reduction of the height of the wellhead structure is sufficient to be very advantageous.

## Claims

1. A wellhead structure comprising:
a casing string (50) within a well bore,
a housing (44) surrounding the upper end of the string, and
means (46, 48) connecting the housing to the upper end of said string, and
characterised by
an annular adaptor (52) positioned generally coaxially within said housing, said adaptor (52) having an internal recess (58) with lands (70) and grooves (72) on its lower interior, and an upper external recess (62), said adaptor being positioned within said housing (44) with its internal recess (58) accomodating the upper end of the casing string (50), the upper end of said casing string (50) having been cold forged into tight gripping and sealing engagement with the interior of said internal recess (58), and a metal-to-metal seal assembly (76) positioned within said upper external recess (62) to seal between the exterior of said adaptor (52) and the interior of said housing.

2. A wellhead structure according to claim 1, wherein
said connecting means includes a slip assembly having a slip bowl (46) and a plurality of slips (48) supported on a landing seat (45) on said housing,
the exterior of said casing string (50) is tightly engaged by said slips (48) so that said slips are in tight supporting engagement therewith, and annular adaptor (52) being landed on said slip assembly.

3. A wellhead structure according to claim 1 or claim 2, wherein
said adaptor internal recess (58) includes upper sharp teeth (68), lower sharp teeth (74) and said lands (70) and grooves (72) are positioned between the upper and lower teeth.

## Patentansprüche

1. Bohrlochkopfaufbau, mit
- einem Futterrohrstrang (50) in einem Bohrloch,
- einem das obere Ende des Strangs umgebenden Gehäuse und mit einer
- Einrichtung (46, 48), zur Verbindung des Gehäuses mit dem oberen Ende des Strangs, **gekennzeichnet durch** einen im allgemeinen koaxial in diesem Gehäuse befindlichen ringförmigen Adapter (52), der eine mit Stegen (70) und Vertiefungen (72) versehene innere Aussparung (58) auf seiner unteren Innenfläche und eine obere äußere Aussparung (62) aufweist, wobei sich dieser Adapter innerhalb des Gehäuses (44) mit seiner inneren Aussparung (58) befindet, die das obere Ende des Futterrohrstrangs (50) aufnimmt, das obere Ende dieses Futterrohrstrangs (50) in dichtschließendem Eingriff mit der Innenfläche der inneren Aussparung (58) kalt angeformt ist und eine Metalldichtungseinheit (76) in der oberen äußeren Aussparung (62) als Dichtung zwischen der Außenfläche des Adapters (52) und der Innenfläche des Gehäuses angebracht ist.

2. Bohrlochkopfaufbau nach Anspruch 1, **dadurch gekennzeichnet**, daß die Verbindungseinrichtung eine Gleiteinheit mit einem Gleitbecher (46) und mehreren Gleitmitteln (48) aufweist, die auf einem Anschlagsitz (45) auf dem Gehäuse gelagert sind, wobei
die Außenfläche des Futterrohrstrangs (50) derart dicht von den Gleitmitteln (48) erfaßt ist, daß sich diese Gleitmittel in einem dichtschließenden Stützeingriff mit ihr befinden, und der ringförmige Adapter (52) auf der Gleiteinheit anschlägt.

3. Bohrlochkopfaufbau nach Anspruch 1 oder 2, **dadurch gekennzeichnet**, daß die innere Aussparung (58) des Adapters obere (68) und untere spitze Zähne (74) enthält und die Stege (70) und Vertiefungen (72) zwischen den oberen und unteren Zähnen angeordnet sind.

## Revendications

1. Structure de tête de puits comportant :
une colonne de tubage (50) située dans un alésage de puits,
un boîtier (44) entourant l'extrémité supérieure de la colonne, et
des moyens (46, 48) reliant le boîtier à l'extrémité supérieure de ladite colonne, et
caractérisée en ce qu'un
adaptateur (52) annulaire est agencé de manière générale coaxialement à l'intérieur dudit boîtier, ledit adaptateur (52) ayant une cavité intérieure (58) avec des crêtes (70) et des gorges (72) situées sur sa partie intérieure inférieure, et une cavité (62) supérieure extérieure, ledit adaptateur étant positionné dans ledit boîtier (44) en ayant sa cavité intérieure (58) recevant l'extrémité supérieure de la colonne de tubage (50), l'extrémité supérieure de la colonne de tubage (50) ayant été forgée à froid jusqu'à être en contact de prise et d'étanchéité serrées à l'intérieur de ladite cavité intérieure (58), et un ensemble (76) formant étanchéité métal sur métal étant situé dans ladite cavité (62) extérieure supérieure pour assurer l'étanchéité entre l'extérieur dudit adaptateur (52) et l'intérieur dudit boîtier.

2. Structure de tête de puits selon la revendication 1, dans laquelle
lesdits moyens de liaison comportent un ensemble à coulisses ayant un manchon (46) à coulisses et plusieurs coulisses (48) supportées par un siège (45) d'amarrage situé sur ledit boîtier,
l'extérieur de ladite colonne de tubage (50) est étroitement en contact avec lesdites coulisses (48) de telle sorte que lesdites coulisses sont en contact de support étroit avec ce dernier, l'adaptateur annulaire (52) étant amarré sur ledit ensemble à coulisses.

3. Structure de tête de puits selon la revendication 1 ou 2, dans laquelle
ladite cavité intérieure (58) de l'adaptateur comporte des dents aiguës supérieures (68), des dents aiguës inférieures (74) et lesdites crêtes (70) et gorges (72) sont positionnées entre les dents supérieures et inférieures.
